# EUROPEAN PATENT APPLICATION

(11) **EP 4 653 473 A1**
(43) Date of publication of application: **26.11.2025**
(21) Application number: 25178484.9
(22) Date of filing: 23.05.2025
(51) Int. Cl.: C08B 11/02, C08B 11/08, C08B 11/193

(54) **METHOD FOR PRODUCING CELLULOSE ETHER**

(30) Priority: 24.05.2024 JP 2024084438
(71) Applicant: SHIN-ETSU CHEMICAL CO., LTD., Tokyo 100-0005 (JP)
(72) Inventor: MIKI, Kentaro, Niigata, 942-8601 (JP); MURAYAMA, Tomotaka, Niigata, 942-8601 (JP); KITAMURA, Akira, Niigata, 942-8601 (JP); HIRAMA, Yasuyuki, Niigata, 942-8601 (JP)
(74) Representative: Ipsilon

(57) **Abstract**

Provided is a method for producing cellulose ether having a reduced degree of yellowness, a low content of ash, and a high bulk density, and the method involves a reduced consumption of water or energy compared to conventional methods. The method for producing cellulose ether essentially includes the steps of: allowing alkali cellulose and an etherifying agent to react with each other to produce a reaction product; washing the reaction product and removing liquid from the product to produce a first hydrous cellulose ether; cooling the first hydrous cellulose ether; heating the cooled first hydrous cellulose ether to 60 to 110°C; using a screw press to remove liquid from the heated first hydrous cellulose ether to obtain a second hydrous cellulose ether in a form of solid immediately after being discharged from the screw press; and drying and pulverizing the second hydrous cellulose ether.

## Description

### BACKGROUND OF THE INVENTION

### Field of the invention

The present invention relates to a method for producing cellulose ether.

### Background art

Cellulose ethers are widely utilized in pharmaceuticals, food production, and various industries as, for example, a coating agent for tablets, a capsule base material, a thickening agent for solvents, a suspension stabilizer, and a dispersing agent.

Cellulose ether can be produced by allowing alkali cellulose and an etherifying agent to react with each other, followed by washing and removing liquid from the reaction product, and then drying and pulverizing the product.

A cellulose ether specifically intended for use as a food additive or pharmaceutical product is preferably low in the degree of yellowness to enhance its appearance. In addition, such cellulose ether preferably has a low ash content.

For example, JP-A-2002-541945 reports a technique to reduce the ash content in cellulose ether by increasing the amount of water used for washing or enhancing the washing frequency during the washing and liquid removal steps.

In addition, cellulose ethers are typically supplied in powdered form. Such powder is preferably designed to have a higher bulk density to optimize storage and transportation space, as well as to improve the flowability of powder during use. For example, JP-A-2017-186557 reports a method for producing a cellulose ether with high bulk density by mixing cellulose ether with water at 70°C or higher to achieve a water content in the cellulose ether of 55 to 90% by mass, followed by cooling the hydrous cellulose ether.

The cooled hydrous cellulose ether has a particle surface in a dissolved state which exhibits excessively strong adhesiveness and tackiness. In view of this, as examples of methods for reducing the adhesiveness and tackiness when drying the hydrous cellulose ether, there have been used a technique as proposed by JP-A-2001-240601 in which a hydrous cellulose ether is pulverized while being heated using a high-speed rotation impact mill and a technique as proposed by JP-A-2015-214683 in which a cooled hydrous cellulose ether is dried in two steps using a pneumatic conveying dryer and a conductive heat dryer.

### SUMMARY OF THE INVENTION

The method described in JP-A-2002-541945 requires a substantial volume of hot water for washing cellulose ether, resulting in challenges such as heightened water and energy consumption, as well as enlarged space for washing and liquid-removal facilities Moreover, increasing the volume of water or the frequency of washing only results in a minimal reduction in the degree of yellowness or ash content.

The methods proposed in JP-A-2001-240601 and JP-A-2015-214683 employ a process of drying a hydrous cellulose ether having a high content of water by blowing hot air, which necessitates vast volume of hot air to be produced, leaving a room for improvement in the energy consumption for the drying step.

It is therefore an object of the present invention to provide a method for producing cellulose ether having a reduced degree of yellowness, a low content of ash, and a high bulk density, and the method involves a reduced consumption of water or energy compared to conventional methods.

The inventors of the present invention diligently conducted a series of studies to solve the aforementioned objects, and completed the invention by finding that use of a screw press for removing water after heating the cooled cellulose ether reduces the degree of yellowness and lowers an ash content in the cellulose ether, while the method also enables reduction in steam consumption in the process of producing cellulose ether.

The present invention provides a method for producing cellulose ether as defined below:
<1> A method for producing cellulose ether comprising the steps of:
   allowing alkali cellulose and an etherifying agent to react with each other to produce a reaction product;
   washing the reaction product and removing liquid from the reaction product to produce a first hydrous cellulose ether;
   cooling the first hydrous cellulose ether;
   heating the cooled first hydrous cellulose ether to 60 to 110°C;
   using a screw press to remove liquid from the heated first hydrous cellulose ether to obtain a second hydrous cellulose ether in a form of solid immediately after being discharged from the screw press; and
   drying and pulverizing the second hydrous cellulose ether.
<2> The method according to <1>, wherein the first hydrous cellulose ether to be supplied to the cooling step has a water content of 50 to 90% by mass.
<3> The method according to <1> or <2>, further comprising a step of adjusting the first hydrous cellulose ether, produced through washing and liquid removal of the reaction product, to have a water content of 50 to 90% by mass, where the step of adjusting the first hydrous cellulose ether is implemented after the step of washing the reaction product and removing liquid from the reaction product to produce the first hydrous cellulose ether and prior to the step of cooling the first hydrous cellulose ether.
<4> The method according to any one of <1> to <3>, wherein the second hydrous cellulose ether has a water content of 10 to 35% by mass.
<5> The method according to any one of <1> to <4>, wherein the step of cooling the first hydrous cellulose ether comprises a step of cooling the first hydrous cellulose ether to 0 to 40°C.
<6> The method according to any one of <1> to <5>, wherein a 2.0% by mass aqueous solution of the cellulose ether produced by the method according to any one of <1> to <5> exhibits a viscosity at 20°C of 100 to 100,000 mPa·s.

The present invention can reduce the degree of yellowness and lower the ash content of cellulose ether, while the method also enables a reduction in energy consumption in the process of producing cellulose ether.

### BRIEF DESCRIPTION OF THE DRAWINGS

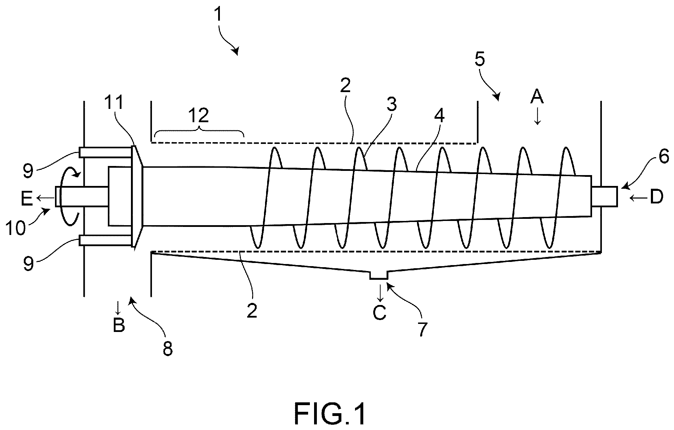

FIG. 1 illustrates a schematic view of an example of a screw press for use in a liquid removal step.

### DETAILED DESCRIPTION OF THE INVENTION

The present invention will be described in greater detail hereinbelow.

The method for producing cellulose ether essentially includes the steps of: allowing alkali cellulose and an etherifying agent to react with each other to produce a reaction product; washing the reaction product and removing liquid from the product to produce a first hydrous cellulose ether; cooling the first hydrous cellulose ether; heating the cooled first hydrous cellulose ether to 60 to 110°C; using a screw press to remove liquid from the heated first hydrous cellulose ether to obtain a second hydrous cellulose ether in a form of solid immediately after being discharged from the screw press; and drying and pulverizing the second hydrous cellulose ether.

The term "screw press" as used herein refers to a machine for performing solid-liquid separation using a compressing force produced with the aid of variation in volume that varies from a supply region of the dewatering raw material to a discharge region of the dewatered product.

### [Reaction step]

In the reaction step, an alkali cellulose, prepared by bringing a pulp into contact with an alkali metal hydroxide solution, is reacted with an etherifying agent to produce a reaction product.

Examples of pulps include a wood pulp and a cotton linter pulp. The pulp may be of a powder-, sheet- or chip-shaped form.

The pulp has an intrinsic viscosity preferably of 300 to 2500 ml/g, more preferably of 350 to 2300 ml/g, even more preferably of 400 to 2000 ml/g, and most preferably of 400 to 1500 ml/g. A pulp with an intrinsic viscosity of less than 300 ml/g may result in a cellulose ether whose 2% by mass aqueous solution at 20°C exhibits a low viscosity, whereas a pulp with an intrinsic viscosity greater than 2500 ml/g is scarcely available.

Examples of the alkali metal hydroxide solution include aqueous solutions of alkali metal hydroxide such as a sodium hydroxide aqueous solution and a potassium hydroxide aqueous solution from the viewpoint of economy and handleability. The concentration of the alkali metal hydroxide in the alkali metal hydroxide solution is preferably 23 to 60% by mass from the viewpoint of economy and handleability.

The mass ratio of the alkali metal hydroxide in the alkali cellulose to the solid content in the pulp (alkali metal hydroxide/solid component in the pulp) is not particularly limited so long as it results in a desired degree of substitution, but it is preferred that the ratio be 0.30 to 1.50, more preferably 0.35 to 1.45.

An amount of the alkali metal hydroxide solution to be used therein may be suitably selected in accordance with the above-described mass ratio. The mass of the alkali metal hydroxide component may be calculated based on neutralization titration.

The solid component in the pulp means components other than water in the pulp. The solid component in the pulp includes, in addition to the cellulose as a main component, organic matter such as hemicellulose, lignin, and resin, and inorganic matter such as Si and Fe components. The solid component in the pulp may be calculated from the dry matter content determined in accordance with Pulps-Determination of Dry Matter Content in JIS P8203:1998. The dry matter content is the ratio of the mass of the sample being subjected to drying at 105±2°C and reaching constant mass to the mass of the sample prior to the drying. The dry matter content is expressed in % by mass.

Examples of the etherifying agent for use in the reaction step include alkyl halides such as methyl chloride and ethyl chloride; and alkylene oxides such as ethylene oxide and propylene oxide. The etherifying agent may be added to the alkali cellulose all at once, in several batches, or continuously.

An organic solvent not involved in the etherification reaction may be added to the reaction system to suppress localized temperature increases in the reactor during the etherification reaction process. Examples of such organic solvent not involved in the etherification reaction include dimethyl ether.

The temperature of the etherification reaction is preferably 40 to 120°C. The reaction time of the etherification reaction is preferably 1 to 5 hours.

### [Washing and liquid removal step]

In this step, the reaction product is washed and liquid is removed therefrom to produce a first hydrous cellulose ether. The washing and liquid removal may be performed using known techniques. For example, hot water, preferably at 85 to 100°C, may be added to the reaction product to form a slurry with a cellulose ether concentration of preferably 1 to 15% by mass, which is then washed and subjected to liquid removal.

The washing and liquid removal processes may be performed separately or simultaneously. For example, filtering or squeezing process may be carried out after the washing process, or alternatively, filtering or squeezing process may be carried out while pouring washing water.

Examples of machine for use in washing and performing liquid removal include a reduced pressure filtration device, a pressure filtration device, a centrifugal dehydrator, a filter press, and a V-type disc press. It is preferred in terms of productivity that the machine for use in washing and performing liquid removal be a continuously operating pressure filter, more preferably a pressure rotary filter, and even more preferably a pressure rotary filter inside which a plurality of segment zones are provided and each segment zone has a structure in which supply of the slurry, filtration of the slurry to form a cake, supply of steam, supply of washing water and filtration, discharge of the washed product, and washing of the filter after discharge can be carried out. Examples of such pressure rotary filter include a rotary pressure filter manufactured by BHS Sonthofen Gmbh.

It is preferred in terms of the ash content and the degree of yellowness of the cellulose ether that the first hydrous cellulose ether obtained through washing and liquid removal have a water content of 30 to 80% by mass, more preferably of 35 to 70% by mass.

It is also preferred in terms of bulk density of the produced cellulose ether that the first hydrous cellulose ether to be supplied to the subsequent cooling step have a water content of 50 to 90% by mass, more preferably of 52 to 85% by mass, even more preferably of 55 to 80% by mass, and most preferably of 55 to 75% by mass.

For this reason, in order to produce a cellulose ether having a low level of ash content and degree of yellowness and a high level of bulk density, there may be introduced a step, as necessary, of adjusting the first hydrous cellulose ether produced through the washing and liquid removal processes to have a water content preferably of 50 to 90% by mass, more preferably of 52 to 85% by mass, even more preferably of 55 to 80% by mass, and most preferably of 55 to 75% by mass, where the step is implemented between the step of washing the reaction product and removing liquid from the reaction product to produce the first hydrous cellulose ether and the step of cooling the first hydrous cellulose ether.

The water content of the first hydrous cellulose ether may be adjusted by mixing the first hydrous cellulose ether, obtained in the washing and liquid removal step, with water or hot water. The manner of mixing the first hydrous cellulose ether with water or hot water may be carried out either continuously or in a batched manner but it is preferred in terms of productivity and uniformity in water content distribution of the first hydrous cellulose ether that the mixing be performed continuously. The hot water or water preferably has a temperature of 5 to 95°C.

The water content of the first hydrous cellulose ether is a value determined using a heating-and-drying moisture analyzer (MX-50 manufactured by A&D Company, Limited) under the conditions: a sample weight of 5 g, a heating temperature of 105°C, and a heating duration of 120 minutes. The water contents of the second hydrous cellulose ether and the cellulose ether as the final product are also values measured using the same method employed for determining the water content of the first hydrous cellulose ether. The term "water content" refers to the ratio of water to the total sum of water and cellulose ether, rather than the ratio of water to the cellulose ether alone.

### [Cooling step]

In this step, a first hydrous cellulose ether, preferably having a water content of 50 to 90% by mass, is cooled. As a method for cooling the first hydrous cellulose ether, a known cooling technique can be used. For example, a method of putting the first hydrous cellulose ether into a container to bring it into contact with a cooled jacket, a method of bringing the first hydrous cellulose ether into contact with cold air, or a method of using vaporization heat of water can be used. The cooling may be carried out either continuously or in a batched manner but it is preferred in terms of productivity and uniformity in temperature distribution of the first hydrous cellulose ether that the mixing be performed continuously.

In the cooling step, the first hydrous cellulose ether is cooled until it reaches a product temperature of preferably 0 to 40°C, more preferably of 5 to 37°C, and even more preferably of 7 to 35°C.

It is preferred that the first hydrous cellulose ether maintain the above-defined temperature range after being cooled and be supplied to the subsequent heating step. That is, it is preferred in terms of bulk density of the cellulose ether that the first hydrous cellulose ether after being cooled have a temperature of 0 to 40°C, more preferably 5 to 37°C, and even more preferably 7 to 35°C.

### [Heating step]

In this step, the cooled first hydrous cellulose ether is heated. The heating of the first hydrous cellulose ether may be performed using, for example, a method of bringing the first hydrous cellulose ether into contact with hot water or steam, a method of placing the first hydrous cellulose ether in a container to bring it into contact with a heated jacket, or a method of irradiating electromagnetic waves, including microwaves or infrared light, onto the first hydrous cellulose ether. The heating machine for use in any of these heating methods may be either a batch type or a continuous type. It is preferred that the first hydrous cellulose ether be stirred during heating to ensure uniform heat application.

After heating, the first hydrous cellulose ether preferably maintains a temperature of 60 to 110°C, preferably of 70 to 110°C, more preferably 80 to 110°C, and even more preferably 90 to 105°C, from the viewpoint of minimizing cellulose ether adhesion to a screw press used in the later-described liquid removal step or preventing clogging of the screw press caused by such adhesion of the cellulose ether, and efficiently removing liquid therefrom.

Moreover, it is preferred that the heated first hydrous cellulose ether before being supplied to the liquid removal step (using a screw press) result in a 2.0% by mass aqueous solution whose viscosity at 20°C is 100 to 100,000 mPa·s, more preferably 150 to 80,000 mPa·s, even more preferably 200 to 50,000 mPa·s, and most preferably 300 to 30,000 mPa·s. A first hydrous cellulose ether that produces a 2.0% by mass aqueous solution with a viscosity at 20°C ranging from 100 to 100,000 mPa·s results in a second hydrous cellulose ether of solid form through the liquid removal step and is therefore preferable. In order to produce a 2.0% by mass aqueous solution of the first hydrous cellulose ether with a viscosity at 20°C within the above range, a pulp having an intrinsic viscosity within the above range may be used, or depolymerization of alkali cellulose or cellulose ether can be prevented from occurring between the reaction step and the liquid removal step. Methods for preventing depolymerization of alkali cellulose or cellulose ether between the reaction step and the liquid removal step include a method of controlling the amount of oxygen in contact with alkali cellulose and a method of excluding oxidants, such as hydrogen peroxide, or acids, such as hydrogen chloride, from the system at each step.

A first hydrous cellulose ether that produces a 2.0% by mass aqueous solution with a viscosity at 20°C of less than 100 mPa·s could result in a final product of the cellulose ether whose 2.0% by mass aqueous solution at 20°C suffers from an unacceptably low viscosity (See Comparative Examples 5 and 6 described below). In addition, performing the liquid removal step in the presence of an acid or oxidant may promote the depolymerization of the first hydrous cellulose ether, potentially resulting in a cellulose ether final product with extremely low viscosity at 20°C at a concentration of 2.0% by mass.

The viscosity at 20°C of a 2.0% by mass aqueous solution of the first hydrous cellulose ether can be measured by drying the heated first hydrous cellulose ether after the heating step with the aid of a shelf dryer until it reaches a water content of 5.0% by mass or less, coarsely pulverizing it, and then preparing a 2.0% by mass aqueous solution from the resulting material.

Here, as for the viscosity of the 2% by mass aqueous solution of the first hydrous cellulose ether at 20°C, when the 2.0% by mass viscosity thereof is not lower than 600 mPa·s, the viscosity can be measured by a single cylinder-type rotational viscometer in accordance with "Viscosity measurement by rotational viscometer" described in the section "General Tests, Processes and Apparatus" of Japanese Pharmacopoeia 18th Edition. Meanwhile, if the 2.0% by mass viscosity is lower than 600 mPa·s, measurement can be carried out by an Ubbelohde-type viscometer in accordance with "Viscosity measurement by capillary tube viscometer" described in the section "General Tests, Processes and Apparatus" of Japanese Pharmacopoeia 18th Edition.

### [Liquid removal step]

In this step, liquid is removed using a screw press from the first hydrous cellulose ether heated in the heating step to obtain a second hydrous cellulose ether. This step may also be referred to as the "second liquid removal step" to distinguish this step from the "washing and liquid removal step" that is performed between the step of allowing alkali cellulose and an etherifying agent to react with each other and the cooling step.

The screw press refers to a machine for performing solid-liquid separation using a compressing force produced with the aid of variation in volume that varies from a supply region of dewatering raw material to a discharge region of dewatered product. FIG. 1 is a schematic view illustrating an example of the screw press for use in the liquid removal step.

The screw press 1 is comprised of a substantially cylindrical filtration cylinder 2 having a plurality of pores formed by, for example, a punching process or slits for discharging a liquid component and a screw concentrically arranged inside the filtration cylinder 2, where the screw is comprised of a screw shaft 4 and a screw blade 3 welded thereon around the shaft 4. The screw shaft 4 has a volume that progressively increases from the supply region 5 of the dewatering raw material toward the discharge region 8 of the dewatered product. The screw 4 shaft allows a liquid or gas to run through from a temperature control liquid supplying port 6 to a temperature control liquid discharging port 10 to control the temperature. Further, the screw shaft 4 includes a straight region 12 where no screw blade 3 is provided at a section before the discharge region 8 of the liquid-removed product for the purpose of prolonging the residence time of dewatering raw material A in the apparatus to enhance dewatering efficacy. That is, the dewatering raw material A, transported while being dewatered by volume variation from the supply region of the dewatering raw material toward the discharge region of the dewatered product, resides at the straight region 12 where no screw blade 3 is provided, which causes the dewatering raw material A, subsequently transported from the supply region 5 of the dewatering raw material, to be pressurized from the side of the discharge region 8 of the dewatered product, thus allowing a dewatered product B to further reduce its water content. The straight region 12 whose length is also referred to as the "straight length" or "plug length", can have its length adjusted by moving the screw, which is parallelly movable along the main axis. The discharge region 8 of the dewatered product is provided with a back pressure plate 11 that has a shape of a circular truncated cone and is concentrically arranged around the screw shaft 4. The back pressure plate 11 allows for a controlled opening degree and can apply pressure (hereafter also referred to as "back pressure") using a pneumatic cylinder 9 from the discharge region 8 of the dewatered product toward the supply region 5 of the dewatering raw material. Pressate C is a liquid component squeezed off by the screw press 1 and passes through the pores in the filtration cylinder 2 and is discharged via a pressate discharging portion 7.

Examples of such screw press include an FKC screw press (manufactured by Fukoku Kogyo Co., Ltd.), an ISGK V-type hybrid pressure-fit screw press (manufactured by ISHIGAKI COMPANY,LTD), and a YSP type screw press dehydrator (manufactured by Yamato Sangyo Co., Ltd.).

A method for removing a liquid from the heated first hydrous cellulose ether using a screw press will be explained with reference to a screw press 1 as illustrated in FIG. 1.

First, a screw that intends to achieve a desired compression ratio is selected as appropriate. The term "compression ratio" of a screw refers to the ratio of the cross-sectional area of the space between the inner wall of the filtration cylinder 2 and the screw shaft 4 at its smallest diameter to the cross-sectional area of the space between the inner wall of the filtration cylinder 2 and the screw shaft 4 at its largest diameter.

Next, the desired screw rotation speed, straight length, back pressure plate opening degree, back pressure, and screw shaft inlet temperature are set. After the setting is completed, the screw press 1 is put in operation to rotate the screw shaft 4. After the screw rotation speed reached a desired rotation speed, the heated first hydrous cellulose ether is placed thereinto as a dewatering raw material A from the supply region 5 of the dewatering raw material. The dewatering raw material A supplied from the supply region 5 of the dewatering raw material undergoes a gravity filtration through pores in the filtration cylinder 2 located immediately below the supply region 5 of the dewatering raw material A by which a liquid component is partially separated from solid. The dewatering raw material A from which a liquid component is partially separated is transferred by a rotating screw toward the discharge region 8 of the dewatered product. The liquid removal during this process is carried out by the variation in volume from the supply region 5 of the dewatering raw material to the discharge region 8 of the dewatered product. The dewatered product B falls off from the discharge region 8 of the dewatered product by its own weight or the product B collides with the back pressure plate 11 to be coarsely crushed and then falls off from the discharge region 8 of the dewatered product. The pressate C-a liquid component separated from solid-is discharged through pores in the filtration cylinder 2 and is collected from the pressate discharging portion 7.

It is preferred that the screw press have a screw shaft inlet temperature of 100 to 160°C, more preferably of 110 to 150°C, and even more preferably of 115 to 145°C. A screw shaft inlet temperature of less than 100°C may result in a second hydrous cellulose ether having a high water content. A screw shaft inlet temperature higher than 160°C may burn the cellulose ether on the surface of the screw shaft, which in turn may result in a production of extraneous matter.

It is preferred in terms of water content of the second hydrous cellulose ether that the compression ratio be 1.1 to 2.0, more preferably 1.2 to 1.8.

It is preferred in terms of the water content of the second hydrous cellulose ether that the straight length be 100 to 150 mm, more preferably 120 to 150 mm.

It is preferred in terms of the water content of the second hydrous cellulose ethe that the back pressure be 0 to 0.5 MPaG, and more preferably 0.1 to 0.45 MPaG.

It is preferred in terms of dischargeability of the second hydrous cellulose ether that the back pressure plate be open to the extent of greater than 20 mm which is although not particularly limited.

It is preferred in terms of obtaining second hydrous cellulose ether of low water content while maintaining a high level of production efficiency that the screw rotation speed be 0.5 to 6 rpm, more preferably 1 to 4 rpm.

The second hydrous cellulose ether obtained using a screw press after the liquid removal step preferably has a water content of 10 to 35% by mass, more preferably of 12 to 30% by mass, and even more preferably of 13 to 27% by mass. A second hydrous cellulose ether having a water content of less than 10% by mass may result in a dewatered product that is excessively rigid and exhibits poor crushability in the pulverizing step. A second hydrous cellulose ether with a water content exceeding 35% by mass not only increases the degree of yellowness and ash content of the cellulose ether but also requires a greater amount of steam used during the drying step.

The second hydrous cellulose ether, immediately after being discharged through a screw press, takes the form of a solid. The term "solid" as used herein refers to a form of material in a solid state without fluidity, appearing as a cake, aggregate, or granule. A form of material in a molten state with fluidity is excluded from this definition. When a second hydrous cellulose ether, immediately after being discharged through a screw press, takes the form of a molten state with fluidity or is in a liquid state, a pressing force of the screw press is not efficiently conveyed to the cellulose ether and the second hydrous cellulose ether may have a high level of water content. This may also cause the cellulose ether to be leaked from the slits or punching holes of the filtration cylinder of the screw press, making it impossible to continue continuous operation.

In addition, various studies revealed that if the second hydrous cellulose ether, immediately after being discharged from a screw press, takes the form of a molten state with fluidity or a liquid state, the final cellulose ether product produces a 2.0% by mass aqueous solution which exhibits a low viscosity at 20°C.

Accordingly, in order for the second hydrous cellulose ether, immediately after being discharged from a screw press, to take the form of a solid, it is preferred that the 2.0% by mass aqueous solution of the heated first hydrous cellulose ether, prior to being supplied to the screw press, have a viscosity at 20°C of 100 to 100,000 mPa·s, more preferably of 150 to 80,000 mPa·s, even more preferably of 200 to 50,000 mPa·s, and most preferably of 300 to 30,000 mPa·s as described above.

### [Drying/ pulverizing step]

In this step, the second hydrous cellulose ether undergoes drying and pulverization to produce cellulose ether. The processes of drying and pulverization can be conducted either separately or simultaneously. For instance, pulverization may follow drying, drying may follow pulverization, or both processes may occur simultaneously.

Examples of dryers include a conductive heat dryer such as an agitated trough dryer, an agitated cylindrical dryer, or a steam heating tube rotary dryer; and a fluid-bed dryer, a pneumatic conveying dryer, a band dryer, and a shelf drier. Two or more types of dryers may be combined for the drying.

Examples of preferable pulverizers include a feather mill, a cutter mill, an impact crusher, a ball mill, a vibration mill, a roller mill, and a jet mill. Two or more types of pulverizers may be combined to perform pulverization.

Examples of the method for simultaneously performing drying and pulverization include a method in which a heated gas together with the second hydrous cellulose ether is introduced into an impact crusher or a roller mill.

After drying and pulverization are completed, sieving and mixing are conducted as needed to produce cellulose ether.

### [Cellulose ether]

Examples of the cellulose ether include an alkylcellulose, a hydroxyalkylcellulose, and a hydroxyalkylalkylcellulose. Alkylcellulose and hydroxyalkylalkylcellulose are preferred from the view point of the form of the second hydrous cellulose ether obtained through liquid removal using a screw press.

Examples of the alkyl cellulose include methyl cellulose having a degree of substitution (DS) of methoxy groups of 1.0 to 2.2 and ethylcellulose having a DS of ethoxy groups of 2.0 to 2.6.

Examples of the hydroxyalkyl cellulose include hydroxyethyl cellulose having a molar substitution (MS) of hydroxyethoxy groups of 1.0 to 2.2 and hydroxypropyl cellulose having an MS of hydroxypropoxy groups of 2.0 to 4.0.

Examples of the hydroxyalkyl alkyl cellulose include hydroxyethyl methyl cellulose having a DS of methoxy groups of 1.3 to 2.2, and an MS of hydroxyethoxy groups of 0.1 to 0.6; hydroxypropyl methylcellulose having a DS of methoxy groups of 1.3 to 2.2, and an MS of hydroxypropoxy groups of 0.1 to 0.6; and hydroxyethyl ethylcellulose having a DS of ethoxy groups of 1.3 to 2.2, and an MS of hydroxyethoxy groups of 0.1 to 0.6.

The DS (degree of substitution) refers to the number of the alkoxy groups per number of anhydroglucose unit in cellulose. The MS (molar substitution) refers to the average mole substitution number of hydroxyalkoxy groups per 1 mol of anhydroglucose unit.

The DS for an alkoxy group and the MS for a hydroxyalkoxy group for cellulose ether may be obtained by converting the contained amounts of the alkoxy and hydroxyalkoxy groups in accordance with the analytical methods as set forth in the Japanese Pharmacopoeia 18^{th} Edition.

It is preferred that 2.0% by mass aqueous solution of the cellulose ether exhibit a viscosity at 20°C of 100 to 100,000 mPa·s, more preferably of 150 to 80,000 mPa·s, even more preferably of 200 to 50,000 mPa·s, and most preferably of 300 to 30,000 mPa·s. 2.0% by mass aqueous solution of the cellulose ether having a viscosity at 20°C of less than 100 mPa·s may fail to efficiently convey a pressing force of the screw press to the cellulose ether and the second hydrous cellulose ether may have a high level of water content. This may also cause the cellulose ether to be leaked from the slits or punching holes of the filtration cylinder in the screw press, making it impossible to continue continuous operation.

Here, when the viscosity at 20°C of the 2% by mass aqueous solution is not lower than 600 mPa·s, the viscosity can be measured by a single cylinder-type rotational viscometer in accordance with "Viscosity measurement by rotational viscometer" described in the section "General Tests, Processes and Apparatus" of Japanese Pharmacopoeia 18th Edition. Meanwhile, if the viscosity of the 2% by mass aqueous solution is lower than 600 mPa·s, measurement can be carried out by an Ubbelohde-type viscometer in accordance with "Viscosity measurement by capillary tube viscometer" described in the section "General Tests, Processes and Apparatus" of Japanese Pharmacopoeia 18th Edition.

It is preferred in terms of enhancing transparency of the cellulose ether for use as a film or having lesser amounts of residual products for incinerating the cellulose ether in the end that the cellulose ether contain an ash content of 0.0 to 0.20% by mass, more preferably 0.0 to 0.15% by mass.

The ash content may be measured in accordance with a measuring procedure as set forth in Japanese Pharmacopoeia 18^{th} Edition.

It is preferred in terms of appearance that a solution of the cellulose ether exhibits a degree of yellowness of 1.0 to 2.8, more preferably of 1.0 to 2.7. The manner of determining the degree of yellowness is as explained in examples below.

It is preferred in term of appearance that a tablet of the cellulose ether exhibit a degree of yellowness of 1.0 to 8.0, and more preferably of 1.0 to 7.0. The manner of determining the degree of yellowness of a tablet is as explained in examples below.

It is preferred in terms of flowability and storage space that the cellulose ether have a loose bulk density of 0.2 to 0.6 ml/g, more preferably of 0.3 to 0.5 ml/g. The term "Loose bulk density" refers to a bulk density in a loosely packed state, and is measured using a powder characteristics tester by which a material is uniformly supplied through a sieve having an opening size of 1 mm into a cylindrical container (whose material is of stainless steel) having a diameter of 5.05 cm and a height of 5.05 cm (volume: 100 ml) from (23 cm) above the cylindrical container, and the supplied material is leveled at the top face of the container for weighing. Specific examples of such powder characteristics tester include a powder characteristics tester of POWDER TESTER PT-S type manufactured by Hosokawa Micron Corporation.

### WORKING EXAMPLES

The present invention will be explained in detail hereinbelow with reference to working and comparative examples. It should not be construed that the invention is limited to or by the following examples. In the following examples, unless otherwise stated, each evaluation indicates a value measured by the method as defined above.

### Working Example 1

Pulp chips being derived from wood and having an intrinsic viscosity of 450 ml/g were immersed in 49% by mass aqueous sodium hydroxide solution. The mass ratio of the 49% by mass aqueous sodium hydroxide solution to the solid component in the pulp during immersion was 200. Then, an excess of the 49% by mass aqueous sodium hydroxide solution was removed to obtain alkali cellulose. The mass ratio of the alkali metal hydroxide in the obtained alkali cellulose to the solid component in the pulp (Sodium hydroxide/Solid component in the pulp) was 1.25. The alkali cellulose (100 parts by mass of solid component) was placed in a pressure vessel (reactor) with a plowshare-type internal stirring blade. The pressure in the pressure vessel was reduced to -97 kPa, and then nitrogen gas was introduced to let the pressure return to atmospheric pressure. Then, the pressure was reduced to -97 kPa again. Next, 40 parts by mass of dimethyl ether, 220 parts by mass of methyl chloride, and 28 parts by mass of propylene oxide were added into the reactor by using a pressure pump, and were allowed to react for two hours in total while raising the temperature from 60°C to 100°C to obtain a reaction product.

Hot water at 95°C was added to the resultant reaction product to form a slurry. The slurry had a cellulose ether concentration of 10% by mass. The slurry was supplied to a rotary pressure filter to wash and perform liquid removal to obtain a first hydrous cellulose ether. The first hydrous cellulose ether had a water content of 35.0% by mass.

Subsequently, the first hydrous cellulose ether was put into a plowshare-type mixer equipped with a spray nozzle whose jacket temperature was 90°C. Hot water at 90°C was sprayed through the spray nozzle while stirring the cellulose ether. After the spraying of hot water was completed, the stirring was continued for 5 minutes to adjust the water content in the first hydrous cellulose ether to 61.8% by mass.

The first hydrous cellulose ether was then put into a plowshare-type mixer whose jacket temperature was 10°C, and then stirred for 10 minutes to cool the first hydrous cellulose ether until its product temperature reached 15°C.

After that, the cooled first hydrous cellulose ether was put into a plowshare-type mixer whose jacket temperature was 130°C to bring the first hydrous cellulose ether in contact with steam at 130°C to heat the cellulose ether. The first hydrous cellulose ether after being heated had a temperature of 95°C.

Next, the heated first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 130 mm, back pressure of 0.3 MPaG, back pressure plate opening degree of 20 mm, and screw rotation speed of 1 rpm to obtain a second hydrous cellulose ether having a water content of 27.0% by mass.

The second hydrous cellulose ether was crushed by a feather mill (FM-1 manufactured by HOSOKAWA MICRON CORPORATION) equipped with a screen of 5 mm opening size, and supplied to a puddle dryer (NPD-1.6G manufactured by NARA MACHINERY CO., LTD.) with the puddle temperature of 130°C (steam having steam pressure of 0.3 MPaG was supplied) to dry the cellulose ether. The dried cellulose ether was pulverized by a victory mill (VP-1 manufactured by HOSOKAWA MICRON CORPORATION with a 0.5 mm screen). The pulverized cellulose ether was sieved through a sieve with an opening size of 100 µm to obtain cellulose ether.

The DS of methoxy (MeO) groups, the MS of hydroxypropoxy (HPO) groups, and the viscosity at 20°C of 2.0% by mass aqueous solution of the obtained cellulose ether were respectively measured by the methods as explained above. In addition, the methods as shown below were used to measure the total consumption amount of steam, the degree of yellowness of the solution, the degree of yellowness of the tablet, the ash content, and the loose bulk density. These results are as shown in Table 1. In Table 1, the term "cellulose ether" is abbreviated as "CE".

### <Measurement of total steam consumption amount>

The total amount of steam consumption was determined using a flowmeter by measuring the steam volume used in each step (i.e., in each of the heating step, second liquid removal or preliminary drying step, and drying step), and then summing the volumes to calculate each relative value to the total consumption amount of steam of Working Example 1. The results are as shown in Table 1. Here, the term "second liquid removal step" refers to the process of removing liquid from the first hydrous cellulose ether using a screw press or another type of dehydrator. The term "preliminary drying step" refers to a process of preliminarily drying the first hydrous cellulose ether with a dryer, such as a pneumatic conveying dryer, before it is subjected to the drying step.

### <Ash content measurement>

The ash content was determined by the test method as set forth in the section of "2.44 The Residue on Ignition Test" specified in General Tests in the Japanese Pharmacopoeia 18th Edition.

### <Determination on degree of yellowness of solution>

There was prepared 2% by mass aqueous solution of the cellulose ether, and an SM color computer of SM-4 (manufactured by Suga Test Instruments Co., Ltd.) was used to analyze the sample solution to measure the degree of yellowness.

### <Determination on degree of yellowness of tablet>

An automatic tableting machine (AUTOTAB-200 W manufactured by Ichihachi-Seiki Co., Ltd.) was used to compress 450 mg of cellulose ether powder at a tableting pressure of 15 kN into a tablet having a diameter of 12 mm. This operation was repeated to make three tables in total. Then, a spectrophotometric color difference meter SE-7000 (manufactured by NIPPON DENSHOKU INDUSTRIES CO., LTD.) and an attachment with 6 mm diameter hole were used to measure the degree of yellowness on the front and back sides of the three tablets. Each tablet was measured three times, resulting in a total of 18 measurements, to determine the degree of yellowness of the tablet.

### <Measurement of Loose bulk density>

Loose bulk density was measured using a powder characteristics tester of POWDER TESTER PT-S type (manufactured by Hosokawa Micron Corporation) by which material was uniformly supplied through a sieve having an opening size of 1 mm onto a cylindrical container (whose material is of stainless steel) having a diameter of 5.05 cm and a height of 5.05 cm (volume: 100 ml) from (23 cm) above the cylindrical container, and the supplied material is leveled at the top face of the container for weighing.

### Working Example 2

Cellulose ether was produced in the same manner as in Working Example 1 except that a screw press having a straight length of 150 mm was used. The results are as shown in Table 1.

### Working Example 3

Pulp chips being derived from wood and having an intrinsic viscosity of 550 ml/g were immersed in a 49% by mass aqueous sodium hydroxide solution. The mass ratio of the 49% by mass aqueous sodium hydroxide solution to the solid component in the pulp during immersion was 200. Then, an excess of the 49% by mass aqueous sodium hydroxide solution was removed to obtain alkali cellulose. The mass ratio of the alkali metal hydroxide in the obtained alkali cellulose to the solid component in the pulp (Sodium hydroxide/Solid component in the pulp) was 1.25. The alkali cellulose (100 parts by mass of solid component) was placed in a pressure vessel (reactor) with a plowshare-type internal stirring blade. The pressure in the pressure vessel was reduced to -97 kPa, and then nitrogen gas was introduced therein to let the pressure return to atmospheric pressure. Then, the pressure was reduced to - 97 kPa again. Next, 40 parts by mass of dimethyl ether, 222 parts by mass of methyl chloride, and 43 parts by mass of propylene oxide were added into the reactor by using a pressure pump, and were allowed to react for two hours in total while raising the temperature from 60°C to 100°C to obtain a reaction product.

Hot water at 95°C was added to the resultant reaction product to form a slurry. The slurry had a cellulose ether concentration of 10% by mass. The slurry was supplied to a rotary pressure filter to perform washing and liquid removal to obtain a first hydrous cellulose ether. The first hydrous cellulose ether had a water content of 36.0% by mass.

Subsequently, the first hydrous cellulose ether was put into a plowshare-type mixer equipped with a spray nozzle whose jacket temperature was 90°C. Hot water at 90°C was sprayed through the spray nozzle while stirring the cellulose ether, and then the stirring was continued for 5 minutes to adjust the water content in the first hydrous cellulose ether to 61.8% by mass.

The first hydrous cellulose ether was then put into a plowshare-type mixer whose jacket temperature was 10°C, and then stirred for 10 minutes to cool the first hydrous cellulose ether until its product temperature reached 15°C.

After that, the cooled first hydrous cellulose ether was put into a plowshare-type mixer whose jacket temperature was 130°C, where steam at 130°C was injected to heat the first hydrous cellulose ether. The first hydrous cellulose ether after being heated had a temperature of 95°C.

Next, the heated first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 150 mm, back pressure of 0.3 MPaG, back pressure plate opening degree of 20 mm, and screw rotation speed of 1 rpm to obtain a second hydrous cellulose ether having a water content of 24.0% by mass.

The second hydrous cellulose ether was dried, pulverized, and sieved in the same manner as in Working Example 1 to obtain cellulose ether. The results are as shown in Table 1.

### Working Example 4

Cellulose ether was produced in the same manner as in Working Example 3 except that pulp chips having an intrinsic viscosity of 1200 ml/g were used. The results are as shown in Table 1.

### Working Example 5

100 parts by mass of pulp powder having an intrinsic viscosity of 800 ml/g was placed in a pressure vessel (reactor) with a plowshare-type internal stirring blade, and the pressure in the pressure vessel was reduced to -95 kPa, and then nitrogen gas was introduced therein to let the pressure return to atmospheric pressure. This operation was repeated twice and the pressure was reduced to -95 kPa. Next, 143 parts by mass of a 49% by mass aqueous sodium hydroxide solution was added thereto to obtain alkali cellulose. The mass ratio of the alkali metal hydroxide in the obtained alkali cellulose to the solid component in the pulp (sodium hydroxide/solid component in the pulp) was 0.70. Next, 40 parts by mass of dimethyl ether, 124 parts by mass of methyl chloride, and 30 parts by mass of propylene oxide were added into the reactor by using a pressure pump, and were allowed to react for two hours in total while raising the temperature from 60°C to 100°C to obtain a reaction product.

Hot water at 95°C was added to the resultant reaction product to form a slurry. The slurry had a cellulose ether concentration of 10% by mass. The slurry was supplied to a rotary pressure filter to perform washing and liquid removal to obtain a first hydrous cellulose ether. The first hydrous cellulose ether had a water content of 44.0% by mass.

Subsequently, the first hydrous cellulose ether was put into a plowshare-type mixer equipped with a spray nozzle whose jacket temperature was 90°C. Hot water at 90°C was sprayed through the spray nozzle while stirring the cellulose ether, and then the stirring was continued for 5 minutes to adjust the water content in the first hydrous cellulose ether to 55.0% by mass.

The first hydrous cellulose ether was then put into a plowshare-type mixer whose jacket temperature was 30°C, and then stirred for 10 minutes to cool the first hydrous cellulose ether until its product temperature reached 34°C.

After that, the cooled first hydrous cellulose ether was put into a plowshare-type mixer whose jacket temperature was 130°C, where steam at 130°C was injected to heat the first hydrous cellulose ether. The first hydrous cellulose ether after being heated had a temperature of 95°C.

Next, the heated first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 150 mm, back pressure of 0.3 MPaG, back pressure plate opening degree of 20 mm, and screw rotation speed of 1 rpm to obtain a second hydrous cellulose ether having a water content of 24.0% by mass. The second hydrous cellulose ether was dried, pulverized, and sieved in the same manner as in Working Example 1 to obtain cellulose ether. The results are as shown in Table 1.

### Working Example 6

100 parts by mass of pulp powder having an intrinsic viscosity of 800 ml/g was placed in a pressure vessel (reactor) with a plowshare-type internal stirring blade, and the pressure in the pressure vessel was reduced to -95 kPa, and then nitrogen gas was introduced therein to let the pressure return to atmospheric pressure. This operation was repeated twice and the pressure was reduced to -95 kPa. Next, 187 parts by mass of 49% by mass aqueous sodium hydroxide solution was added thereto to obtain alkali cellulose. The mass ratio of the alkali metal hydroxide in the obtained alkali cellulose to the solid component in the pulp (sodium hydroxide/solid component in the pulp) was 1.01. Next, 35 parts by mass of dimethyl ether and 172 parts by mass of methyl chloride were added into the reactor by using a pressure pump, and were allowed to react for two hours in total while raising the temperature from 60°C to 100°C to obtain a reaction product.

Hot water at 95°C was added to the resultant reaction product to form a slurry. The slurry had a cellulose ether concentration of 10% by mass. The slurry was supplied to a rotary pressure filter to perform washing and liquid removal to obtain a first hydrous cellulose ether. The first hydrous cellulose ether had a water content of 35.0% by mass.

Subsequently, the first hydrous cellulose ether was put into a plowshare-type mixer equipped with a spray nozzle whose jacket temperature was 90°C. Hot water at 90°C was sprayed through the spray nozzle while stirring the cellulose ether, and then the stirring was continued for 5 minutes to adjust the water content in the first hydrous cellulose ether to 59.5% by mass.

The first hydrous cellulose ether was then put into a plowshare-type mixer whose jacket temperature was 10°C, and then stirred for 10 minutes to cool the first hydrous cellulose ether until its product temperature reached 15°C.

After that, the cooled first hydrous cellulose ether was put into a plowshare-type mixer whose jacket temperature was 130°C, where steam at 130°C was injected to heat the first hydrous cellulose ether. The first hydrous cellulose ether after being heated had a temperature of 95°C.

Next, the heated first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 150 mm, back pressure of 0.3 MPaG, back pressure plate opening degree of 20 mm, and screw rotation speed of 1 rpm to obtain a second hydrous cellulose ether having a water content of 20.0% by mass. The second hydrous cellulose ether was dried, pulverized, and sieved in the same manner as in Working Example 1 to obtain cellulose ether. The results are as shown in Table 1.

### Comparative Example 1

The same processes as those in Working Example 1 were applied up to the cooling step to obtain a first hydrous cellulose ether at 15°C having a water content of 61.8% by mass.

Then, the first hydrous cellulose ether and hot air at 135°C were introduced into a pneumatic conveying dryer to perform preliminary drying to obtain a second hydrous cellulose ether. The second hydrous cellulose ether had a water content of 40% by mass. The second hydrous cellulose ether was dried, pulverized, and sieved in the same manner as in Working Example 1 to obtain cellulose ether.

### Comparative Example 2

The same processes as those in Working Example 1 were applied up to the cooling step to obtain a first hydrous cellulose ether at 15°C having a water content of 61.8% by mass.

Subsequently, the first hydrous cellulose ether was put into a plowshare-type mixer whose jacket temperature was 50°C, and then stirred. The first hydrous cellulose ether after being stirred had a temperature of 30°C.

Then, the above first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 150 mm, back pressure of 0.3 MPaG, back pressure plate opening degree of 20 mm, and screw rotation speed of 1 rpm but noticeable adhesion of the hydrous cellulose ether to the screw was observed. Additionally, the adhesion increased to the point where the screw became clogged, making the liquid removal operation difficult to perform continuously.

### Comparative Example 3

The same processes as those in Working Example 1 were applied up to the step of adjusting the water content to 61.8% by mass to obtain a first hydrous cellulose ether. The first hydrous cellulose ether had a temperature of 80°C. The first hydrous cellulose ether did not undergo the cooling step. Instead, it was placed into a plowshare-type mixer with a jacket temperature of 130°C, where steam at 130°C was injected to heat the first hydrous cellulose ether. The first hydrous cellulose ether after being heated had a temperature of 95°C.

After that, the above first hydrous cellulose ether underwent liquid removal using a screw press, drying, pulverization, and sieving in the same manner as in Working Example 1 to thereby produce cellulose ether.

### Comparative Example 4

The same processes as those in Working Example 1 were applied up to the heating step to obtain a first hydrous cellulose ether. The first hydrous cellulose ether had a temperature of 95°C when the heating step was completed. A rotary pressure filter was used to remove liquid from the first hydrous cellulose ether, thus resulting in a second hydrous cellulose ether. The second hydrous cellulose ether had a water content of 50.0% by mass. The second hydrous cellulose ether was dried, pulverized, and sieved in the same manner as in Working Example 1 to obtain cellulose ether. The results are as shown in Table 1.

### Comparative Example 5

Pulp chips being derived from wood and having an intrinsic viscosity of 550 ml/g were immersed in a 54% by mass aqueous sodium hydroxide solution. The mass ratio of the 54% by mass aqueous sodium hydroxide solution to the solid component in the pulp during immersion was 200. Then, an excess of the 54% by mass aqueous sodium hydroxide solution was removed to obtain alkali cellulose. The mass ratio of the alkali metal hydroxide in the obtained alkali cellulose to the solid component in the pulp (sodium hydroxide/solid component in the pulp) was 1.21. The alkali cellulose (100 parts by mass of solid component) was placed in a pressure vessel (reactor) with a plowshare-type internal stirring blade. Hot water at 95°C was supplied through a jacket of the reactor. Then, the reactor was aerated with air for 30 minutes while being stirred. The alkali cellulose had a product temperature of 50°C when the aeration was initiated, while the alkali cellulose had a product temperature of 85°C when the aeration was completed. The pressure was reduced to -97kPaG, and then nitrogen gas was introduced therein to let the pressure return to atmospheric pressure. Then, the pressure was reduced to -97 kPa again. Next, 40 parts by mass of dimethyl ether, 197 parts by mass of methyl chloride, and 41 parts by mass of propylene oxide were added into the reactor by using a pressure pump, and were allowed to react for two hours in total while raising the temperature from 60°C to 100°C to obtain a reaction product.

The resultant reaction product was formed into a slurry, and then subjected to the first washing and liquid removal process, underwent adjustment of water content, cooled, and heated in the same manner as in Working Example 1 to obtain a first hydrous cellulose ether having a temperature of 95°C.

Next, the heated first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 150 mm, back pressure of 0.3 MPaG, back pressure plate opening degree of 20 mm, and screw rotation speed of 1 rpm. The second hydrous cellulose ether discharged from the screw press was in a molten state with fluidity. The second hydrous cellulose ether, in a molten state with fluidity, leaked through the slits of the filtration cylinder in the screw press. This leakage prevented the screw press from operating continuously.

The leaked second hydrous cellulose ether was dried by a shelf dryer whose temperature was set at 80°C and pulverized by a Wiley mill (manufactured by YOSHIDA SEISAKUSHO CO., LTD, 1.0 mm screen), and then its physical properties were measured.

### Comparative Example 6

Pulp chips being derived from wood and having an intrinsic viscosity of 550 ml/g were immersed in a 49% by mass aqueous sodium hydroxide solution. The mass ratio of the 49% by mass aqueous sodium hydroxide solution to the solid component in the pulp during immersion was 200. The mass ratio of the alkali metal hydroxide in the obtained alkali cellulose to the solid component in the pulp (Sodium hydroxide/Solid component in the pulp) was 0.70. The alkali cellulose (100 parts by mass of solid component) was placed in a pressure vessel (reactor) with a plowshare-type internal stirring blade. Hot water at 95°C was supplied through a jacket of the reactor. Then, the reactor was aerated with air for 40 minutes while being stirred. The alkali cellulose had a product temperature of 50°C when the aeration was initiated, while the alkali cellulose had a product temperature of 85°C when the aeration was completed. The pressure was reduced to -97kPaG, and then nitrogen gas was introduced therein to let the pressure return to atmospheric pressure. Then, the pressure was reduced to - 97 kPa again. Next, 40 parts by mass of dimethyl ether, 122 parts by mass of methyl chloride, and 30 parts by mass of propylene oxide were added into the reactor by using a pressure pump, and were allowed to react for two hours in total while raising the temperature from 60°C to 100°C to obtain a reaction product.

The resultant reaction product was formed into a slurry, and then subjected to the first washing and liquid removal process, underwent adjustment of water content, cooled, and heated in the same manner as in Working Example 1 to obtain a first hydrous cellulose ether having a temperature of 95°C.

Next, the heated first hydrous cellulose ether was subjected to liquid removal using a screw press (SHX-200, manufactured by Fukoku Kogyo Co., Ltd.) under the conditions of screw shaft inlet temperature of 130°C (steam having steam pressure of 0.3 MPaG was supplied), compression ratio of 1.47, straight length of 150 mm, back pressure of 0.3 MPaG, back pressure plate opening degree of 20 mm, and screw rotation speed of 1 rpm. The second hydrous cellulose ether discharged from the screw press was in a molten state with fluidity. The second hydrous cellulose ether was dried, pulverized, and sieved in the same manner as in Working Example 1 to obtain cellulose ether. The results are as shown in Table 1.

**Table 1**

| | **Washing/liquid removal step** | | **Cooling step** | **Heating step** | | |
|---|---|---|---|---|---|---|
| | **Machine** | **Water content of first hydrous CE** | | **Temperature of first hydrous CE prior to heating step** | **Temperature of first hydrous CE after heating step** | **Viscosity of 2.0% by mass aqueous solution of first hydrous CE** |
| | **-** | **[% by mass]** | | **[°C]** | **[°C]** | **[mPa·s]** |
| Working Example 1 | RPF | 61.8 | Present | 15 | 95 | 420 |
| Working Example 2 | RPF | 61.8 | Present | 15 | 95 | 420 |
| Working Example 3 | RPF | 62.0 | Present | 15 | 95 | 1,050 |
| Working Example 4 | RPF | 62.0 | Present | 15 | 95 | 10,800 |
| Working Example 5 | RPF | 55.0 | Present | 34 | 95 | 4,150 |
| Working Example 6 | RPF | 59.5 | Present | 15 | 95 | 4,200 |
| Comparative Example 1 | RPF | 61.8 | Present | 15 | 15 | 420 |
| Comparative Example 2 | RPF | 61.8 | Present | 15 | 30 | 420 |
| Comparative Example 3 | RPF | 61.8 | Absent | 80 | 95 | 420 |
| Comparative Example 4 | RPF | 61.8 | Present | 15 | 95 | 420 |
| Comparative Example 5 | RPF | 60.0 | Present | 15 | 95 | 21 |
| Comparative Example 6 | RPF | 60.0 | Present | 30 | 95 | 72 |

| | **Second liquid removal or preliminary drying step** | | | | | | | | **Drying step** |
|---|---|---|---|---|---|---|---|---|---|
| | **Machine** | **Temperature *1** | **Straight length of SCP** | **Temperature of second hydrous CE** | **Water content of second hydrous CE** | **State of second hydrous CE** | **Adhesion to machine** | **Continuous operation** | **Machine** |
| | **-** | **[°C]** | **[mm]** | **[°C]** | **[% by mass]** | **-** | **-** | **-** | **-** |
| Working Example 1 | SCP | 130 | 130 | 95 | 27.0 | Solid | None | Possible | PD |
| Working Example 2 | SCP | 130 | 150 | 95 | 22.0 | Solid | None | Possible | PD |
| Working Example 3 | SCP | 130 | 150 | 95 | 24.0 | Solid | None | Possible | PD |
| Working Example 4 | SCP | 130 | 150 | 95 | 22.0 | Solid | None | Possible | PD |
| Working Example5 | SCP | 130 | 150 | 95 | 24.0 | Solid | None | Possible | PD |
| Working Example 6 | SCP | 130 | 150 | 95 | 20.0 | Solid | None | Possible | PD |
| Comparative Example 1 | Pneumatic conveying dryer | 135 | - | 50 | 40.0 | Solid | None | Possible | PD |
| Comparative Example 2 | SCP | 130 | 150 | 95 | 26.9 | Solid | Observed | Impossible | PD |
| Comparative Example 3 | SCP | 130 | 150 | 95 | 21.5 | Solid | None | Possible | PD |
| Comparative Example 4 | RPF | 120 | - | 95 | 50.0 | Solid | None | Possible | PD |
| Comparative Example 5 | SCP | 130 | 150 | 95 | 31.0 | Molten state with fluidity | None | Impossible | PD |
| Comparative Example6 | SCP | 130 | 150 | 95 | 33.2 | Molten state with fluidity | None | Possible | PD |

| | | | | | | | | | |
|---|---|---|---|---|---|---|---|---|---|
| *1:Each numeral refers to the temperature at screw shaft inlet if the machine is an SCP, the temperature of hot air inlet if the machine is a pneumatic conveying dryer, or the temperature of steam if the machine is an RPF. | | | | | | | | | |

| | **Total consumption amount of steam** | **Physical properties of cellulose ether** | | | | | | |
|---|---|---|---|---|---|---|---|---|
| | | **MeO group** | **HPO group** | **Viscosity of 2.0% by mass aqueous solution** | **Degree of yellowness of solution** | **Degree of yellowness of tablet** | **Ash content** | **Loose bulk density** |
| | **-** | **DS** | **MS** | **[mPa-s]** | | | **[%]** | **[g/cm³]** |
| Working Example 1 | 1.0 | 1.9 | 0.15 | 400 | 2.5 | 6.6 | 0.14 | 0.37 |
| Working Example 2 | 0.9 | 1.9 | 0.15 | 400 | 2.4 | 6.5 | 0.12 | 0.37 |
| Working Example 3 | 0.9 | 1.9 | 0.24 | 1,000 | 1.9 | 5.9 | 0.12 | 0.39 |
| Working Example 4 | 0.9 | 1.9 | 0.24 | 10,000 | 2.4 | 6.8 | 0.11 | 0.33 |
| Working Example 5 | 0.9 | 1.5 | 0.27 | 4,000 | 2.1 | 6.1 | 0.10 | 0.32 |
| Working Example 6 | 0.8 | 1.8 | - | 4,000 | 2.2 | 6.3 | 0.10 | 0.31 |
| Comparative Example 1 | 2.9 | 1.9 | 0.15 | 400 | 2.9 | 8.6 | 0.21 | 0.39 |
| Comparative Example 2 | - | 1.9 | 0.15 | 400 | - | - | - | - |
| Comparative Example 3 | 0.9 | 1.9 | 0.15 | 400 | 2.5 | 6.5 | 0.12 | 0.19 |
| Comparative Example4 | 1.9 | 1.9 | 0.15 | 400 | 2.9 | 8.6 | 0.21 | 0.39 |
| Comparative Example 5 | - | 1.9 | 0.25 | 20 | - | - | - | - |
| Comparative Example 6 | 1.2 | 1.4 | 0.26 | 70 | 3.3 | 11.1 | 0.45 | 0.37 |

| | | | | | | | | |
|---|---|---|---|---|---|---|---|---|
| RPF : Rotary pressure filter SCP : Screw press PD : Paddle dryer (conductive heat dryer) | | | | | | | | |

As illustrated in Table 1, Working Examples 1 to 6, which follow specified steps, demonstrated reductions in total steam consumption. In addition, the resultant cellulose ethers exhibited low degrees of yellowness and ash content and high bulk densities.

In contrast, Comparative Examples 1 and 4, which employed no screw press, resulted in tablets having high degrees of yellowness and ash contents of which Comparative Example 2 involving no steps of heating the products to 60 to 110°C failed continuous operation, whereas Comparative Example 3, involving no cooling step, resulted in low loose bulk density.

Moreover, since Comparative Examples 5 and 6 underwent depolymerization during the reaction process, which significantly reduced the viscosities at 20°C of 2.0% by mass aqueous solutions of the first hydrous cellulose ethers supplied to the screw press, the second hydrous cellulose ethers discharged immediately from the screw press were in molten states with fluidity. This caused the screw press to either fail in maintaining continuous operation of the liquid removal step or to enhance the degree of yellowness.

## Claims

1. A method for producing cellulose ether comprising the steps of:
allowing alkali cellulose and an etherifying agent to react with each other to produce a reaction product;
washing the reaction product and removing liquid from the reaction product to produce a first hydrous cellulose ether;
cooling the first hydrous cellulose ether;
heating the cooled first hydrous cellulose ether to 60 to 110°C;
using a screw press to remove liquid from the heated first hydrous cellulose ether to obtain a second hydrous cellulose ether in a form of solid immediately after being discharged from the screw press; and
drying and pulverizing the second hydrous cellulose ether.

2. The method according to claim 1, wherein the first hydrous cellulose ether to be supplied to the cooling step has a water content of 50 to 90% by mass.

3. The method according to claim 1 or 2, further comprising a step of adjusting the first hydrous cellulose ether, produced through washing and liquid removal of the reaction product, to have a water content of 50 to 90% by mass, where the step of adjusting the first hydrous cellulose ether is implemented after the step of washing the reaction product and removing liquid from the reaction product to produce the first hydrous cellulose ether and prior to the step of cooling the first hydrous cellulose ether.

4. The method according to any one of claims 1 to 3, wherein the second hydrous cellulose ether has a water content of 10 to 35% by mass.

5. The method according to any one of claims 1 to 4, wherein the step of cooling the first hydrous cellulose ether comprises a step of cooling the first hydrous cellulose ether to 0 to 40°C.

6. The method according to any one of claims 1 to 5, wherein a 2.0% by mass aqueous solution of the cellulose ether produced by the method according to any one of claims 1 to 5 exhibits a viscosity at 20°C of 100 to 100,000 mPa·s.
